# EUROPÄISCHE PATENTSCHRIFT

(11) **EP 0 992 715 B1**
(45) Veröffentlichungstag und Bekanntmachung des Hinweises auf die Patenterteilung: **12.05.2004**
(21) Anmeldenummer: 99118314.6
(22) Anmeldetag: 15.09.1999
(51) Int. Cl.: F16H 61/04

(54) **Stufengetriebe und Verfahren zum Auslegen eines Ganges eines Stufengetriebes**
Stepped transmission and procedure for the disengagement of a gear of said transmission
Boîte de vitesses à rapports étagés ainsi qu'une procédure pour le dégagement d'un rapport d'une telle boîte de vitesses

(30) Priorität: 05.10.1998 DE 19845604
(43) Veröffentlichungstag der Anmeldung: 12.04.2000
(73) Patentinhaber: GETRAG Getriebe- und Zahnradfabrik Hermann Hagenmeyer GmbH & Cie KG, 74199 Untergruppenbach (DE)
(72) Erfinder: Nageleisen, Frank, 79199 Kirchzarten (DE); Gussmann, Bernd, 71083 Herrenberg (DE); Hackenjos, Michael, 78112 St. Georgen (DE)
(74) Vertreter: Steil, Christian, Dipl.-Ing.

(56) Entgegenhaltungen:
- EP-A- 0 477 564
- EP-A- 0 573 901
- EP-A- 0 887 220
- US-A- 4 850 236
- PATENT ABSTRACTS OF JAPAN vol. 012, no. 490 (M-779), 21. Dezember 1988 (1988-12-21) & JP 63 210446 A (KOMATSU LTD), 1. September 1988 (1988-09-01)

## Beschreibung

Die vorliegende Erfindung betrifft ein Verfahren zum Auslegen eines Ganges eines Stufengetriebes, das eine Mehrzahl von Gängen aufweist, die mittels wenigstens einer Schaltkupplung einleg- und auslegbar sind, bei welchem Verfahren die Schaltkupplung in Antwort auf ein Gangwechsel-Anforderungssignal mittels eines Getriebeaktuators von einer ersten Schließstellung in eine Offenstellung bewegt wird, wobei die Schaltkupplung mittels des Getriebeaktuators in Richtung der Offenstellung vorgespannt wird, bevor der Getriebeaktuator die Schaltkupplung von der ersten Schließstellung in die Offenstellung bewegt.

Die Erfindung betrifft ferner ein Stufengetriebe mit einer Mehrzahl von Gängen, wenigstens einer Schaltkupplung zum Ein- und Auslegen der Gänge, einem Getriebeaktuator zum Bewegen der Schaltkupplung und mit Steuermitteln zum Ansteuern des Aktuators, so daß dieser die Schaltkupplung in Antwort auf ein Gangwechsel-Anforderungssignal von einer ersten Schließstellung in eine Offenstellung bewegt, wobei die Steuermittel den Getriebeaktuator so ansteuern, daß die Schaltkupplung in Richtung der Offenstellung vorgespannt wird, bevor der Getriebeaktuator die Schaltkupplung von der ersten Schließstellung in die Offenstellung bewegt.

Ein solches Stufengetriebe und ein solches Verfahren zum Auslegen eines Ganges eines Stufengetriebes sind aus der EP-A-0 573 901 bekannt.

In dieser Druckschrift ist eine Schaltanordnung für ein automatisiertes Handschaltgetriebe für ein Kraftfahrzeug offenbart.

Bei den automatisch schaltenden Stufengetrieben für Kraftfahrzeuge unterscheidet man zwischen zwei grundlegenden Konzepten. Das eine Konzept ist eine Kombination aus Planeten-Lastschaltgetriebe und hydrodynamischem Wandler. Insbesondere aufgrund des hydrodynamischen Wandlers ist der Wirkungsgrad solcher Getriebe nicht besonders günstig. Das zweite Konzept, das in jüngerer Zeit immer mehr Verbreitung findet, basiert auf einer Anordnung aus einem herkömmlichen Handschaltgetriebe und einer herkömmlichen Reibungskupplung. Anstelle der Betätigung dieser Elemente durch den Fahrer mittels Kupplungspedal und Schalthebel sind entsprechende Aktuatoren vorgesehen, die in Abhängigkeit von einer übergeordneten Schaltstrategie in aufeinander abgestimmter Weise angesteuert werden, um Gänge zu wechseln.

Dieses zweite Konzept hat zwar einen sehr viel besseren wirkungsgrad als die klassischen automatischen Getriebe. Als nacheilig wird jedoch von einigen Anwendern empfunden, daß - wie bei normalen Handschaltvorgängen auch - eine Zugkraftunterbrechung während eines Schaltvorganges auftritt. Denn während die Reibungskupplung geöffnet ist, um den eigentlichen Schaltvorgang des Getriebes durchzuführen, ist die Abtriebswelle des Motors natürlich von der Antriebswelle des Getriebes abgekoppelt. Durch die Zugkraftunterbrechung entsteht insbesondere beim Wechsel von unteren Gängen eine Nickbewegung des Fahrzeugs, die von manchen Fahrern als unangenehm empfunden wird.

Zur vollständigen Überwindung dieses Problems sind sogenannte Doppelkupplungsgetriebe bekannt. Bei diesen kann die Leistung vom Motor über zwei parallele Pfade auf die Getriebeabtriebswelle gelegt werden. Solche Doppelkupplungsgetriebe sind jedoch konstruktiv vergleichsweise aufwendig.

Um ohne diesen konstruktiven Aufwand die Phase der Zugkraftunterbrechung möglichst zu minimieren und gleichzeitig die mechanischen Einrichtungen des Getriebes weitgehend zu schonen, ist es aus der DE 195 26 273 Al bereits bekannt geworden, die Schaltkraft beim Gangeinlegen zu variieren. Es wird in dieser Druckschrift insbesondere vorgeschlagen, beim Gangeinlegen mittels einer als Synchronisiereinrichtung ausgebildeten Schaltkupplung während der Synchronisationsphase eine niedrigere Kraft, während der Durchschaltphase eine höhere Kraft und während der Andockphase eine geringere Kraft bereitzustellen.

Ferner offenbart die eingangs genannte EP-A-0 573 901 ein halbautomatisches Getriebe, bei dem die Gänge mittels einer Schaltwalze gewechselt werden. Die Trennkupplung wird durch ein Kupplungspedal betätigt. Zur Synchronisierung werden sehr spezielle Rollensynchronisierungen nach dem Funktionsprinzip eines Klemmfreilaufes verwendet. Eine elektronische Steuereinheit steuert die Schaltwalze, um die Rollensynchronisierung eines eingelegten Ganges zu lösen, um die neutrale Position zu erreichen, wenn zwischen dem Antrieb und angetriebenen Gliedern der Rollensynchronkupplung im Wesentlichen keine Last mehr übertragen wird.

Vor diesem Hintergrund ist es die Aufgabe der Erfindung, den Schaltvorgang bei mittels eines Getriebeaktuators schaltbaren Stufengetrieben hinsichtlich der Schaltdauer und des Komforts weiter zu optimieren.

Diese Aufgabe wird dem eingangs genannten Verfahren zum Auslegen eines Ganges eines Stufengetriebes dadurch gelöst, daß die Vorspannung in Antwort auf das Gangwechsel-Anforderungssignal allmählich, vorzugsweise linear, ansteigt und die Geschwindigkeit des Anstiegs der Vorspannung in Abhängigkeit von wenigstens einer physikalischen Größe und/oder dem eingelegten Gang eingestellt wird.

Bei dem eingangs genannten Stufengetriebe wird diese Aufgabe dadurch gelöst, daß die Vorspannung in Antwort auf das Gangwechsel-Anforderungssignal allmählich, vorzugsweise linear, ansteigt und die Geschwindigkeit des Anstiegs der Vorspannung in Abhängigkeit von wenigstens einer physikalischen Größe und/oder dem eingelegten Gang eingestellt wird.

Die der Erfindung zugrunde liegende Aufgabe wird auf diese Weise vollkommen gelöst.

Durch die Maßnahme, die Schaltkupplung mittels des Getriebeaktuators vor dem eigentlichen Gangauslegen vorzuspannen, kann die Schaltkupplung bei einem während eines Gangwechsels typischerweise auftretenden Rückgang des Momentes im Triebstrang schneller in Richtung der Offenstellung, also der Neutralstellung des Stufengetriebes bewegt werden. Denn alle Wege, die sich durch Spiele in der Kette vom Getriebeaktuator bis zur Schaltkupplung ergeben, werden durch das Vorspannen schon vor dem eigentlichen Auslegevorgang zurückgelegt. Beim Rückgang des Momentes im Triebstrang kann der Gang sofort durch die vom Getriebeaktuator ausgeübte Kraft ausgelegt werden.

Es ergibt sich hierdurch eine weitere Schaltzeitverkürzung bei gleichzeitig gutem Komfort. Der Rückgang des Momentes im Antriebsstrang kann sich durch eine beliebige Veränderung des Antriebsmomentes ergeben. In vielen Fällen wird jedoch an einen dem Getriebe vorgeschalteten Motor ein Signal zur Drosselung der Leistung abgegeben, bei einem Verbrennungsmotor beispielsweise an einen Aktuator für eine Drosselklappe.

Generell ist das erfindungsgemäße Verfahren und das erfindungsgemäße Stufengetriebe bei jeder Art von Antriebsstrang einsetzbar. So könnte beispielsweise ein aus einer Brennstoffzelle versorgter Elektromotor direkt mit dem Stufengetriebe gekoppelt sein. Natürlich ist auch eine Verwendung in Verbindung mit einem Verbrennungsmotor und zwischengeschalteter Reibungskupplung vorgesehen, sowie bei Doppelkupplungsgetrieben, obgleich bei letzteren die Schaltzeit wegen der fehlenden Zugkraftunterbrechung nicht so wesentlich ist.

Das Vorspannen erfolgt in Antwort auf das Gangwechsel-Anforderungssignal, also zum Beispiel dann, wenn ein Führer eines Kraftfahrzeuges einen mit einem Sensor versehenen Schalthebel betätigt, oder automatisch aufgrund einer übergeordneten Fahrzeugsteuerung. In Antwort auf das Gangwechsel-Anforderungssignal erfolgt in der Regel, wie oben angedeutet, eine Drosselung der vom Motor abgegebenen Leistung, was zu einem Rückgang des an dem Stufengetriebe anstehenden Drehmomentes führt. Dieser Drehmomentrückgang erfolgt aus verschiedenen Gründen häufig nur allmählich oder zeitlich versetzt zu dem Gangwechsel-Anforderungssignal. Der Zeitraum zwischen dem Auftreten des Gangwechsel-Anforderungssignal und dem Rückgang des Eingangsdrehmomentes des Stufengetriebes auf einen bestimmten Wert kann somit dazu genutzt werden, die Vorspannung auf die Schaltkupplung aufzubauen.

Durch den allmählichen Anstieg der Vorspannung wird ein unkontrolliertes Gangauslegen vermieden. Durch den allmählichen Anstieg kann nämlich erreicht werden, eine bestimmte Größe der Vorspannung innerhalb einer bestimmten Zeitspanne einzustellen, ohne Gefahr zu laufen, daß bereits während dieser Zeitspanne aufgrund beispielsweise von Vorspannungs-Überschwingern Vorspannungswerte erreicht werden, die ein unbeabsichtigtes Auslegen des Ganges mit sich bringen können.

Die Geschwindigkeit des Anstiegs wird in Abhängigkeit einer physikalischen Größe und/oder des eingelegten Ganges eingestellt. Bei der physikalischen Größe kann es sich beispielsweise um die gewünschte Schaltgeschwindigkeit beim automatischen Schalten oder die aktuelle Schaltgeschwindigkeit oder Schaltbeschleunigung eines Schalthebels beim manuellen Schalten handeln. Es versteht sich, daß diese Einstellung individuell für jeden Schaltvorgang erfolgen kann. Dabei ist es natürlich besonders vorteilhaft, wenn in Abhängigkeit von der Art des Gangwechsels (z.B. 1-2 oder 3-4) von vornherein unterschiedliche Grundeinstellungen der Anstiegsgeschwindigkeit der Vorspannung vorgesehen werden. Denn je nach Gangwechsel liegen an dem Stufengetriebe unterschiedliche Drehmomente an.

Vorzugsweise wirkt die Schaltkupplung formschlüssig.

Hierbei ist es möglich, eine Vorspannung auf die Schaltkupplung so aufzubauen, daß die Schaltkupplung bei hinreichendem Rückgang des Eingangsdrehmomentes des Stufengetriebes schlagartig in die Offenstellung, also in die Neutralstellung des Stufengetriebes "flutscht".

Gemäß einem weiteren bevorzugten Ausführungsbeispiel steigt die Vorspannung bis auf einen Endwert an, auf dem die Vorspannung gehalten wird, bis die Schaltkupplung sich in die Offenstellung bewegt.

Dieser Endwert kann in seiner Höhe gleichfalls entweder konstant gleichbleibend für alle Schaltvorgänge, für jede Art des Gangwechsels unterschiedlich oder auch individuell für jeden einzelnen Schaltvorgang in Abhängigkeit von wenigstens einer physikalischen Größe einstellbar sein.

Dabei ist es bevorzugt, wenn der Endwert hinreichend ist, um die Schaltkupplung in einem nicht unbelasteten Zustand von der ersten Schließstellung in die Offenstellung zu bewegen.

Durch diese Maßnahme ist es möglich, die erste Schaltkupplung nicht erst dann von der Schließstellung in die Offenstellung zu bewegen, wenn der Antriebsstrang vollkommen unbelastet ist. Vielmehr kann dies zu einem früheren Zeitpunkt erfolgen, wodurch der Schaltvorgang insgesamt weiter zeitlich optimiert werden kann.

Bei einem Verfahren, bei dem dem Stufengetriebe eine mittels eines Kupplungsaktuators betätigbare Reibungskupplung vorgeschaltet ist und bei dem in Antwort auf das Gangwechsel-Anforderungssignal die Reibungskupplung öffnet, eine erste Schaltkupplung des Getriebes mittels des Getriebeaktuators von einer ersten Schließstellung in eine Offenstellung bewegt wird, die erste oder eine weitere Schaltkupplung von einer Offenstellung in eine zweite Stellung bewegt wird und die Reibungskupplung wieder geschlossen wird, wird vorzugsweise die erste Schaltkupplung mittels des Getriebeaktuators vor dem vollständigen Öffnen der Reibungskupplung in Richtung der Offenstellung vorgespannt.

Durch die Maßnahme, die Schaltkupplung bereits vor dem vollständigen Öffnen der Reibungskupplung in Richtung Offenstellung vorzuspannen, kann die Schaltkupplung zum frühestmöglichen Zeitpunkt von der ersten Schließstellung, also dem bisherigen Gang, in die Offenstellung, also in die Neutralstellung, bewegt werden. Es muß zu diesem Zeitpunkt nicht erst eine Schaltkraft aufgebaut werden. Durch diese Maßnahme wird somit die Zeitdauer der Zugkraftunterbrechung weiter minimiert. Bei automatischen Handschaltgetrieben mit Zugkraftunterbrechung wird der Komfort deutlich verbessert. Da bei Antriebsstängen mit Reibungskupplung ohnehin eine gewisse Zeit benötigt wird, um nach einem Gangwechsel-Anfordungssignal auszukuppeln, kann diese Zeit sehr gut zum Aufbauen der Vorspannung ausgenutzt werden.

Unter einer Reibungskupplung soll im vorliegenden Zusammenhang jede Art von kraft/reibschlüssig schaltbarer Kupplung verstanden werden. Auf der anderen Seite sollen unter Schaltkupplungen in dem vorliegenden Zusammenhang insbesondere formschlüssig schaltbare Kupplungen verstanden werden, z.B. Synchronisiereinrichtungen an sich herkömmlicher Bauart. Vorzugsweise wird hierbei ferner die erste Schaltkupplung mittels des Getriebeaktuators vor dem Erreichen des Schleifpunktes der Reibungskupplung in Richtung der Offenstellung vorgespannt.

Während eines Auskupplungsvorganges wird der sogenannte Schleifpunkt durchlaufen, also der Punkt, bei dem die beiden durch die Reibungskupplung verbundenen Wellen beginnen, mit unterschiedlichen Drehzahlen zu drehen. Vor dem Schleifpunkt ist die Andruckkraft der Reibungskupplung zwar geringer geworden, reicht jedoch noch aus, um die beiden Wellen kraft/reibschlüssig miteinander zu verbinden. Ab dem Schleifpunkt ist der vollkommene Kraftschluß aufgehoben. Die Kupplung beginnt zu schleifen, d.h. es entwickeln sich Drehzahldifferenzen zwischen Eingangswelle der Kupplung und Ausgangswelle der Kupplung.

Durch die Maßnahme, die erste Schaltkupplung mittels des Getriebeaktuators bereits vor dem Erreichen des Schleifpunktes vorzuspannen, kann der zeitliche Ablauf des Schaltvorganges insgesamt weiter optimiert werden.

Besonders bevorzugt ist es, wenn die Schaltkupplung vor Erreichen des Schleifpunktes der Reibungskupplung von der ersten Schließstellung in die Offenstellung bewegt wird.

Durch diese Maßnahme wird erreicht, daß der Gang ausgelegt wird, während die Kupplung die Antriebskraft vom Motor noch vollständig auf das Getriebe überträgt. Bis zu diesem Zeitpunkt ist jedoch zur Einleitung des Schaltvorganges auch die Motorleistung bereits erheblich gedrosselt, insbesondere durch Schließen der Drosselklappe. Daher ist das von der Schaltkupplung kurz vor dem Erreichen des Schleifpunktes der Reibungskupplung noch übertragene Drehmoment vergleichsweise gering, so daß eine vergleichsweise geringe Vorspannung ausreicht, um die Schaltkupplung von der ersten Schließstellung in die Offenstellung zu bewegen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Antriebsstranges mit einem erfindungsgemäßen, automatisch schaltbaren Stufengetriebes;
- Fig. 2: ein Zeitablaufdiagramm von Motordrehzahl, Getriebedrehzahl, Drosselklappenstellung, Schaltsignal, Reibungskupplungsweg und Schaltkupplungsweg; und
- Fig. 3: ein Zeitablaufdiagramm des mittels des Getriebeaktuators auf die Schaltkupplung übertragenen Vorspannungswertes.

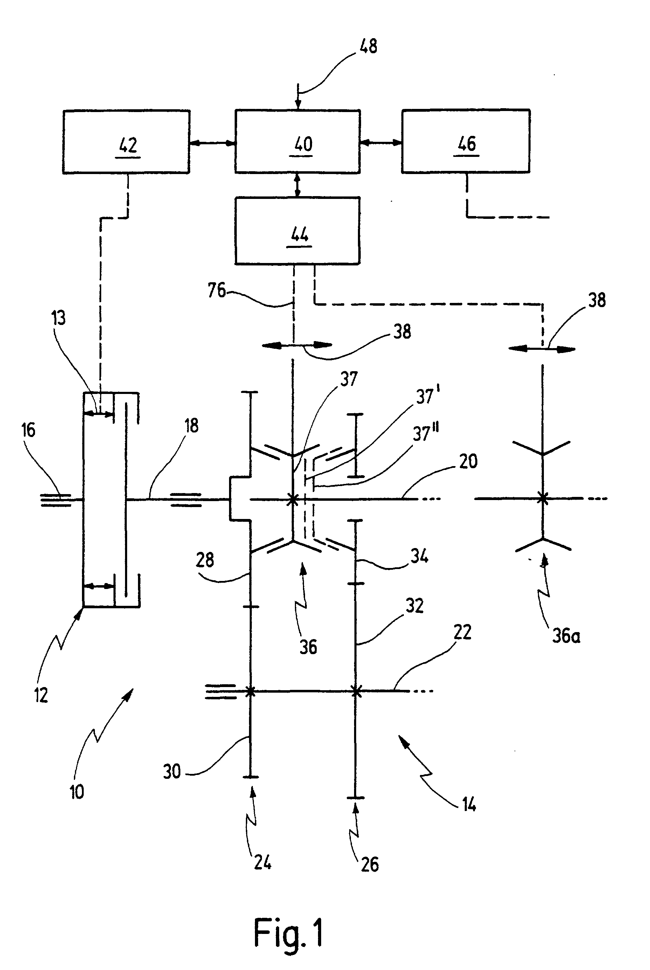

In Fig. 1 ist ein Antriebsstrang eines Kraftfahrzeuges generell bei 10 gezeigt.

Der Antriebsstrang 10 umfaßt eine Kupplung 12 und ein Getriebe 14.

Die Kupplung 12 ist eine Reibungskupplung, die mittels eines schematisch angedeuteten Kupplungsaktuators 13 betätigt werden kann. In einer geschlossenen Stellung verbindet die Reibungskupplung 12 eine Motorabtriebswelle 16 kraftschlüssig mit einer Eingangswelle 18 des Getriebes 14. In einer geöffneten Stellung sind die zwei Wellen 16, 18 voneinander getrennt. Während des Öffnens und Schließens der Kupplung 12 durchläuft die Reibungskupplung 12 eine Schleifphase. Hierbei treten zwei Elemente der Reibungskupplung 12 mit unterschiedlichen Drehzahlen reibend miteinander in Eingriff. Der sogenannte Schleifpunkt ist der Zeitpunkt, zu dem die Differenzdrehzahl zwischen den zwei Elementen, und somit zwischen den zwei Wellen 16, 18, beim Öffnen der Reibungskupplung 12 größer als Null wird bzw. beim Schließen zu Null wird.

Das Getriebe 14 überträgt die Leistung des Motors des Kraftfahrzeuges von der Getriebeeingangswelle 18 auf eine Getriebeabtriebswelle 20.

Das Getriebe 14 ist in an sich bekannter Weise als Vorgelegegetriebe ausgeführt und besitzt eine Vorgelegewelle 22.

Das Getriebe 14 umfaßt eine Mehrzahl von Radsätzen, von denen in Fig. 1 aus Gründen der übersichtlichen Darstellung nur zwei Radsätze 24, 26 gezeigt sind.

Jeder Radsatz 24, 26 umfaßt zwei Zahnräder. Der Radsatz 24 umfaßt bei der dargestellten Ausführungsform ein fest mit der Getriebeeingangswelle 18 verbundenes Zahnrad 28 sowie ein fest mit der Vorgelegewelle 22 verbundenes Zahnrad 30.

Der zweite Radsatz 26 umfaßt ein fest mit der Vorgelegewelle 22 verbundenes Zahnrad 32 und ein auf der Getriebeabtriebswelle 20 gelagertes Zahnrad 34, das als Losrad ausgebildet ist.

Zwischen den Radsätzen 24, 26 ist an der Getriebeabtriebswelle 20 eine als Synchronisiereinrichtung 36 ausgebildete Schaltkupplung angeordnet.

Die Synchronisiereinrichtung 36 ist in Fig. 1 in einer ersten Schließstellung 37 gezeigt, bei der die Synchronisiereinrichtung 36 das Zahnrad 28 und die Getriebeabtriebswelle 20 formschlüssig miteinander verbindet. In Fig. 1 sind zwei weitere Stellungen der Synchronisiereinrichtung 36 gezeigt. In einer zweiten Schließstellung 37" verbindet die Synchronisiereinrichtung 36 das Zahnrad 34 des zweiten Radsatzes 26 formschlüssig mit der Getriebeabtriebswelle 20. Zwischen den zwei Schließstellungen 37, 37'' ist eine Offenstellung 37' gezeigt, in der die Synchronisiereinrichtung 36 auf der Getriebeabtriebswelle 20 mitläuft und weder das Zahnrad 28 noch das Zahnrad 34 mit der Getriebeabtriebswelle 20 verbindet.

Die Synchronisiereinrichtung 36 ist beim Einlegen eines Ganges, also beim Bewegen von der Offenstellung 37' in eine der Schließstellungen 37, 37'', dazu in der Lage, Differenzdrehzahlen zwischen der Getriebeabtriebswelle 20 und dem mit dieser zu verbindenden Zahnrad 28 bzw. 34 auf Null zu reduzieren, die beiden Getriebebauteile somit zu synchronisieren.

Die Synchronisiereinrichtung 36 ist mittels eines Aktuators 38 des Getriebes 14 auf der Getriebeabtriebswelle 20 hin- und herbewegbar.

Das Getriebe 14 umfaßt neben den Radsätzen 24, 26 noch weitere Radsätze und entsprechend noch weitere Synchronisiereinrichtungen, von denen in Fig. 1 eine weitere Synchronisiereinrichtung 36a schematisch gezeigt ist. Die weitere Synchronisiereinrichtung 36a ist ebenfalls mittels des Getriebeaktuators 38 betätigbar.

Bei manchen Gangwechseln ist es so, daß eine Schaltkupplung 36 von ihrer ersten Schließstellung 37 durch ihre Offenstellung 37' in ihre zweite Schließstellung bewegt wird. Es gibt jedoch genauso Gangwechsel, bei denen beispielsweise die Synchronisiereinrichtung 36 von ihrer ersten Schließstellung 37 in ihre Offenstellung 37' bewegt wird und anschließend eine weitere Synchronisiereinrichtung 36a von ihrer Offenstellung in eine Schließstellung bewegt wird.

Das Kraftfahrzeug, in dem die Anordnung 10 eingebaut ist, umfaßt ferner eine zentrale Steuerung 40, eine Kupplungssteuerung 42, eine Getriebesteuerung 44 und eine Motorsteuerung 46.

Die Kupplungssteuerung 42 und die Getriebesteuerung 44 sind mit dem Kupplungsaktuator 13 bzw. dem Getriebeaktuator 38 verbunden.

Die Motorsteuerung 46 ist mit Mitteln zur Beeinflussung der Motorleistung verbunden, üblicherweise mit einer Drosselklappe.

Die zentrale Steuerung 40 ist mit der Kupplungssteuerung 42, der Getriebesteuerung 44 und der Motorsteuerung 46 verbunden und koordiniert deren Steuerungsaufgaben. Es versteht sich, daß die in Fig. 1 als einzelne Steuerungen gezeigten Elemente in Form von Software implementiert werden können, wobei die Einzelsteuerungen 42, 44 und 46 jeweils einzelne Programmodule eines Gesamtsteuerungsprogramms bilden können.

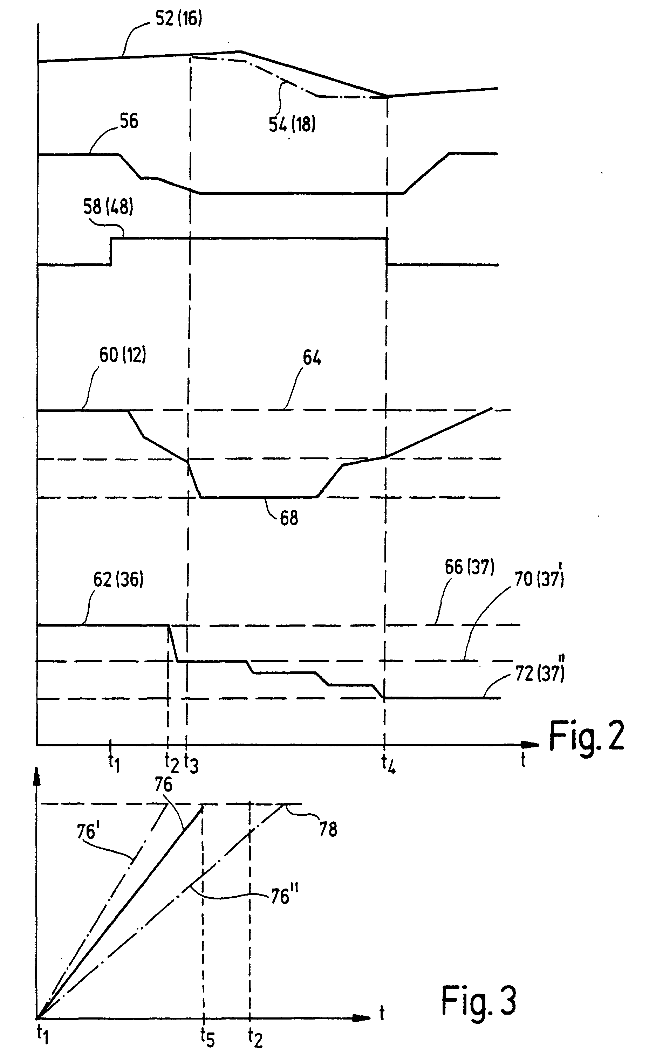

Der Ablauf eines Schaltvorganges, also eines Gangwechsels, bei der in Fig. 1 gezeigten Anordnung 10 ist in Fig. 2 dargestellt.

Dabei bezieht sich Fig. 2 auf den Fall, bei dem eine Synchronisiereinrichtung von einer ersten Schließstellung durch ihre Offenstellung in eine zweite Schließstellung bewegt wird. Die Darstellung läßt sich jedoch auch entsprechend auf Gangwechsel übertragen, bei denen eine erste Synchronisiereinrichtung von einer ersten Schließstellung in eine Offenstellung und eine weitere Synchronisiereinrichtung von einer Offenstellung in eine zweite Schaltstellung bewegt wird.

In Fig. 2 sind über der Zeit aufgetragen eine Motordrehzahl 52 entsprechend der Drehzahl der Motorabtriebswelle 16, eine Getriebedrehzahl 54 entsprechend der Drehzahl der Getriebeeingangswelle 18, eine Drosselklappenstellung 56, ein Gangwechsel-Anforderungssignal 58, eine Stellung 60 der Kupplung 12 und eine Stellung 62 der Synchronisiereinrichtung 36.

Die Darstellung der Fig. 2 geht von einem Zustand aus, bei dem ein Gang eingelegt ist, sich die Synchronisiereinrichtung 36 also in einer ersten Schließstellung 66 befindet, entsprechend beispielsweise der Schließstellung 37 in Fig. 1. Gleichermaßen befindet sich die Reibungskupplung 12 anfänglich in einem vollständig geschlossenen Zustand, wie es bei 64 gezeigt ist.

Auf ein Gangwechsel-Anforderungssignal hin (zum Zeitpunkt t₁), das in einem Handschaltmodus beispielsweise ausgelöst wird durch Betätigung eines Schalthebels, in einem Automatikmodus hingegen von der zentralen Steuerung 40 eigenständig ausgelöst wird, erfolgt zunächst eine Absenkung der Motorleistung, indem die Drosselklappe 56 allmählich geschlossen wird.

Etwas zeitversetzt und ansonsten parallel hierzu wird der Kupplungsaktuator 13 betätigt, so daß die Reibungskupplung 12 von der vollständig geschlossenen Stellung 64 allmählich hin zu einer vollständig geöffneten Stellung 68 bewegt wird. Hierbei durchläuft die Reibungskupplung 12 zum Zeitpunkt t₃ den sogenannten Schleifpunkt. Bis zum Zeitpunkt t₃ schleift die Reibungskupplung 12 noch nicht, die Drehzahlen der Wellen 16 und 18 sind also identisch. Ab dem Schleifpunkt zum Zeitpunkt t₃ beginnt die Reibungskupplung 12 zu schleifen, wobei sich eine allmählich größer werdende Drehzahldifferenz zwischen den Wellen 16 und 18 einstellt, wie es aus den Darstellungen der Motordrehzahl 52 und der Getriebedrehzahl 54 entnehmbar ist.

Bei dem Gangwechsel wird die Synchronisiereinrichtung 36 von der ersten Schaltstellung 37 bzw. 66 zunächst in die Offenstellung bewegt, die in Fig. 2 bei 70 gezeigt ist. Anschließend wird die Synchronisiereinrichtung 36 in eine zweite Schaltstellung 72 bewegt, entsprechend der in Fig. 1 gezeigten Stellung 37". Die Synchronisiereinrichtung 36 hat dabei ihre Endlage 72 erreicht, bevor die Reibungskupplung 12 ausgehend von der vollständig geöffneten Stellung 68 vor der vollständig geschlossenen Stellung 64 zum Zeitpunkt t₄ den Schleifpunkt erreicht, bei dem die Drehzahlen 52 und 54 wieder gleich groß sind.

Die Bewegung der Synchronisiereinrichtung 36 von der ersten Schaltstellung 66 bzw. 37 in die Offenstellung 70 bzw. 37' erfolgt zu einem Zeitpunkt t₂, der noch vor dem Zeitpunkt t₃ liegt. Dies wird erreicht, indem die Synchronisiereinrichtung 36 noch vor dem Erreichen des Schleifpunktes der Reibungskupplung 12 in Richtung der Offenstellung 70 bzw. 37' vorgespannt wird.

Wie dies erfolgt, wird im folgenden anhand von Fig. 3 erläutert.

Nach dem Erkennen des Gangwechsel-Anforderungssignals 48 zum Zeitpunkt t₁ wird von der Getriebesteuerung 44 ein Ansteuerungssignal 76 erzeugt. Das Ansteuerungssignal 76 steigt allmählich, in der Darstellung der Fig. 3 linear, bis zum Zeitpunkt t₅ an und verbleibt in der Folge auf einem Endwert 78 bis zu dem Zeitpunkt t₂, zu dem die Synchronisiereinrichtung 36 in Richtung Offenstellung bewegt wird.

Durch den allmählichen Anstieg des Ansteuerungssignals wird die mittels des Getriebeaktuators 38 auf die Synchronisiereinrichtung 36 wirkende Kraft nach Art einer Vorspannung allmählich erhöht. Die mittels des Getriebeaktuators 38 auf die Synchronisiereinrichtung 36 wirkende Kraft kann dabei beispielsweise direkt proportional zu dem Verlauf des Ansteuerungssignals 76 sein.

Durch den allmählichen Anstieg des Ansteuerungssignals 76 wird einerseits verhindert, daß die Synchronisiereinrichtung 36 unbeabsichtigt von der Schließstellung in die Offenstellung bewegt wird.

Zu beachten ist, daß die zur Bewegung der Synchronisiereinrichtung 36 von der Schließstellung in die Offenstellung erforderliche Kraft davon abhängt, wie groß die Last ist, die in der Schaltstellung übertragen wird, bzw. wie hoch das entsprechende Drehmoment ist. Solange von der Getriebeeingangswelle 18 ein Drehmoment übertragen wird, ist die Synchronisiereinrichtung 36 in der Schaltstellung aufgrund des Formschlusses quasi "verspannt". Daher ist es beispielsweise beim Beschleunigen eines Kraftfahrzeuges nicht möglich, den eingelegten Gang ohne Kupplungsbetätigung auszulegen.

Bei dem in Fig. 2 dargestellten Schaltvorgang ist das von der Getriebeeingangswelle 18 übertragene Drehmoment aufgrund des eingeleiteten Abfalls der Motorleistung (bei 56 gezeigt) zwar noch nicht Null. Das von der Getriebeeingangswelle 18 übertragene Drehmoment hat jedoch zum Zeitpunkt t₂ einen solchen Wert erreicht, daß die Größe der von dem Getriebeaktuator 38 auf die Synchronisiereinrichtung 36 ausgeübten Vorspannung (Kraft) entsprechend dem Endwert 78 in Fig. 3 ausreicht, um die Synchronisiereinrichtung 36 in die Offenstellung 70 bzw. 37' zu bewegen.

Die zum Bewegen der Synchronisiereinrichtung 36 in die Offenstellung notwendige Vorspannung entsprechend der Größe des Ansteuerungsendwertes 78 hängt von dem übertragenen Drehmoment ab und wird daher vorzugsweise für jede Art des Gangwechsels unterschiedlich gewählt. Mit anderen Worten kann der Wert 78 bei einem Gangwechsel von dem ersten in den zweiten Gang beispielsweise höher sein als bei einem Gangwechsel von dem vierten in den fünften Gang.

Ferner wird die Anstiegsgeschwindigkeit der Vorspannung, also die Steigung des Ansteuerungssignals 76, für jeden Schaltvorgang individuell festgelegt. Die Festlegung erfolgt anhand wenigstens einer physikalischen Größe, die beispielsweise die Geschwindigkeit sein kann, mit der ein Handschaltvorgang vollzogen wird. Zusätzlich oder alternativ kann die Steigung des Ansteuerungssignals 76 auch anhand der Fahrzeugbeschleunigung oder Fahrzeuggeschwindigkeit eingestellt werden. Auch andere Parameter, wie z.B. die Einstellung eines Sportmodus oder eines Economy-Modus bei Automatikbetrieb, können herangezogen werden.

Wenn ein Gangwechsel schnell erfolgen soll, wird eine größere Steigung gewählt, so daß sich ein Verlauf ergibt, wie er in Fig. 3 bei 76' gezeigt ist.

Wenn ein langsamerer Schaltvorgang gewünscht ist, kann sich eine geringere Steigung ergeben, wie es bei 76'' gezeigt ist. Im letzteren Fall kann es auch sein, daß die Bewegung der Synchronisiereinrichtung 36 von der Schließstellung 66 in die Offenstellung 70 nicht vor dem Erreichen des Schleifpunktes bei t₃ erfolgt, sondern zu einem etwas späteren Zeitpunkt.

## Patentansprüche

1. Verfahren zum Auslegen eines Ganges (24,26) eines Stufengetriebes (14), das eine Mehrzahl von Gängen (24, 26) aufweist, die mittels wenigstens einer Schaltkupplung (36) einleg- und auslegbar sind, bei welchem Verfahren die Schaltkupplung (36) in Antwort auf ein Gangwechsel-Anforderungssignal (48, 58) mittels eines Getriebeaktuators (38) von einer ersten Schließstellung (37, 66) in eine Offenstellung (37', 70) bewegt wird, wobei die Schaltkupplung (36) mittels des Getriebeaktuators (38) in Richtung der Offenstellung (37', 70) vorgespannt wird, bevor der Getriebeaktuator (38) die Schaltkupplung (36) von der ersten Schließstellung (37, 66) in die Offenstellung (37',70) bewegt,
**dadurch gekennzeichnet, daß**
die Vorspannung (76) in Antwort auf das Gangwechsel-Anforderungssignal (48, 58) allmählich, vorzugsweise linear, ansteigt und daß die Geschwindigkeit des Anstiegs der Vorspannung (76) in Abhängigkeit von wenigstens einer physikalischen Größe und/oder dem eingelegten Gang eingestellt wird.

2. Verfahren nach Anspruch 1, **dadurch gekennzeichnet, daß** die Schaltkupplung (36) formschlüssig wirkt.

3. Verfahren nach Anspruch 1, **dadurch gekennzeichnet, daß** die Vorspannung (76) bis auf einen Endwert (78) ansteigt, auf dem die Vorspannung (76) gehalten wird, bis die Schaltkupplung (36) sich in die Offenstellung (37', 70) bewegt.

4. Verfahren nach Anspruch 3, **dadurch gekennzeichnet, daß** der Endwert (78) hinreichend ist, um die Schaltkupplung (36) in einem nicht unbelasteten Zustand (t₂) von der ersten Schließstellung (37, 66) in die Offenstellung (37', 70) zu bewegen.

5. Verfahren nach einem der Ansprüche 1 bis 4, wobei dem Stufengetriebe (14) eine mittels eines Kupplungsaktuators (13) betätigbare Reibungskupplung (12) vorgeschaltet ist und wobei in Antwort auf das Gangwechsel-Anforderungssignal (48, 58)
- die Reibungskupplung (12) geöffnet,
- eine erste Schaltkupplung (36) des Getriebes (14) mittels des Getriebeaktuators (38) von einer ersten Schließstellung (37, 66) in eine Offenstellung (37', 70) bewegt,
- die erste (36) oder eine weitere (36a) Schaltkupplung von einer Offenstellung (37', 70) in eine zweite Schließstellung (37'', 72) bewegt und
- die Reibungskupplung (12) wieder geschlossen wird,
**dadurch gekennzeichnet, daß**
die erste Schaltkupplung (36) mittels des Getriebeaktuators (38) vor dem vollständigen Öffnen (68) der Reibungskupplung (12) in Richtung der Offenstellung (37', 70) vorgespannt wird.

6. Verfahren nach Anspruch 5, **dadurch gekennzeichnet, daß** die erste Schaltkupplung (36) mittels des Getriebeaktuators (38) vor dem Erreichen (t₃) des Schleifpunktes der Reibungskupplung (12) in Richtung der Offenstellung (37', 70) vorgespannt wird.

7. Verfahren nach Anspruch 6, **dadurch gekennzeichnet, daß** die erste Schaltkupplung (36) vor Erreichen des Schleifpunktes (t₃) der Reibungskupplung (12) von der ersten Schließstellung (37, 66) in die Offenstellung (37', 70) bewegt wird.

8. Stufengetriebe (14) mit einer Mehrzahl von Gängen (24, 26), wenigstens einer Schaltkupplung (36) zum Ein- und Auslegen der Gänge (24,26), einem Getriebeaktuator (38) zum Bewegen der Schaltkupplung (36) und mit Steuermitteln (44) zum Ansteuern des Aktuators (38), so daß dieser die Schaltkupplung (36) in Antwort auf ein Gangwechsel-Anforderungssignal (48, 58) von einer ersten Schließstellung (37, 66) in eine Offenstellung (37', 70) bewegt, wobei die Steuermittel (44) den Getriebeaktuator (38) so ansteuern, daß die Schaltkupplung (36) in Richtung der Offenstellung (37', 70) vorgespannt wird, bevor der Getriebeaktuator (38) die Schaltkupplung (36) von der ersten Schließstellung (37, 66) in die Offenstellung (37', 70) bewegt,
**dadurch gekennzeichnet, daß**
die Vorspannung (76) in Antwort auf das Gangwechsel-Anforderungssignal (48, 58) allmählich, vorzugsweise linear, ansteigt und daß die Geschwindigkeit des Anstiegs der Vorspannung (76) in Abhängigkeit von wenigstens einer physikalischen Größe und/oder dem eingelegten Gang eingestellt wird.

## Claims

1. A method for shifting out a gear (24, 26) of a step transmission (14) that comprises a plurality of gears (24, 26) that can be shifted in and out by means of at least one shift clutch, wherein the shift clutch (36), in the course of the method, is moved by means of a transmission actuator (38) from a first closed position (37, 66) into an open position (37', 70), responsive to a gear change request signal (48, 58), wherein the shift clutch (36) is pre-stressed by means of the transmission actuator (38) into the direction of the open position (37', 70) before the transmission actuator (38) moves the shift clutch (36) from the first closed position (37, 66) into the open position (37', 70),
**characterized in that**
the pre-stress (76), responsive to the gear change request signal (48, 58), increases gradually, preferably linearly, and **in that** the velocity of the increase of the pre-stress (76) is set in dependence from at least one physical entity and/or the gear that is shifted in.

2. The method of claim 1, **characterized in that** the shift clutch (36) is a positive shift clutch.

3. The method of claim 1, **characterized in that** the pre-stress (76) increases to a final value (78) at which the pre-stress (76) is maintained until the shift clutch (36) moves into the open position (37', 70).

4. The method of claim 3, **characterized in that** the final value (78) is sufficient in order to move the shift clutch (36) in a not unloaded condition (t₂) from the first closed position (37, 66) into the open position (37', 70).

5. The method of any of claims 1 to 4, wherein a friction clutch (12) is arranged in front of the step transmission (14), said friction clutch (12) being actuatable by means of a clutch actuator (13), and wherein, in response to the gear change request signal (48, 58)
- the friction clutch (12) is opened,
- a first shift clutch (36) of the transmission (14) is moved by means of the transmission actuator (38) from a first closed position (37, 66) into an open position (37', 70),
- the first (36) or another (36a) shift clutch is moved from an open position (37', 70) into a second closed position (37'', 72), and
- the friction clutch (12) is closed again,
**characterized in that**
the first shift clutch (36) is pre-stressed by means of the transmission actuator (38) into the direction of the open position (37', 70) before the friction clutch (12) is fully opened.

6. The method of claim 5, **characterized in that** the first shift clutch (36) is pre-stressed by means of the transmission actuator (38) into the direction of the open position (37', 70) before the slip point of the friction clutch (12) is reached (t₃).

7. The method of claim 6, **characterized in that** the first shift clutch (36) is moved from the first closed position (37, 66) into the open position (37', 70) before the slip point (t₃) of the friction clutch (12) is reached.

8. A step transmission (14) comprising a plurality of gears (24, 26), at least one shift clutch (36) for shifting in and shifting out the gears (24, 26), a transmission actuator (38) for moving the shift clutch (36), and with control means (44) for driving the actuator (38) such that the actuator moves the shift clutch (36) responsive to a gear change request signal (48, 58) from a first closed position (37, 66) into an open position (37', 70), wherein the control means (44) drive the transmission actuator (38) such that the shift clutch (36) is pre-stressed in the direction of the open position (37', 70) before the transmission actuator (38) moves the shift clutch (36) from the first closed position (37, 66) into the open position (37', 70),
**characterized in that**
the pre-stress (76), responsive to the gear change request signal (48, 58) increases gradually, preferably linearly, and **in that** the velocity of the increase of the pre-stress (76) is set in dependence from at least one physical entity and/or the gear that is shifted in.

## Revendications

1. Procédé pour le dégagement d'un rapport (24, 26) d'une boîte de vitesses étagée (14) qui comporte une pluralité de rapports (24, 26), lesquels peuvent être engagés et dégagés au moyen d'au moins un embrayage de changement de vitesse (36), dans lequel procédé, en réponse à un signal de demande de changement de rapport (48, 58), l'embrayage de changement de vitesse (36) est déplacé au moyen d'un actionneur de boîte de vitesses (38) d'une première position de fermeture (37, 66) dans une position ouverte (37', 70), l'embrayage de changement de vitesse (36) étant mis sous précharge en direction de la position ouverte (37', 70) au moyen de l'actionneur de boîte de vitesses (38) avant que l'actionneur de boîte de vitesses (38) ne déplace l'embrayage de changement de vitesse (36) de la première position de fermeture (37, 66) dans la position ouverte (37', 70).
**caractérisé en ce que**
comme réponse au signal de demande de changement de rapport (48, 58), la précharge (76) augmente progressivement, de préférence linéairement, et que la vitesse de l'accroissement de la précharge (76) est réglée en fonction d'au moins une grandeur physique et/ou du rapport engagé.

2. Procédé selon la revendication 1, **caractérisé en ce que** l'embrayage de changement de vitesse (36) agit par complémentarité de formes.

3. Procédé selon la revendication 1, **caractérisé en ce que** la précharge (76) augmente jusqu'à une valeur finale (78), à laquelle la précharge (76) est maintenue, jusqu'à ce que l'embrayage de changement de vitesse (36) se déplace dans la position ouverte (37', 70).

4. Procédé selon la revendication 3, **caractérisé en ce que** la valeur finale (78) est suffisante pour déplacer l'embrayage de changement de vitesse (36) dans un état non chargé (t₂) de la première position de fermeture (37, 66) dans la position ouverte (37', 70).

5. Procédé selon l'une quelconque des revendications 1 à 4, suivant lequel un embrayage à friction (12) actionnable au moyen d'un actionneur d'embrayage (13) est monté en amont de la boîte de vitesses étagée (14) et suivant lequel, en réponse au signal de demande de changement de rapport (48, 58)
- l'embrayage à friction (12) s'ouvre,
- un premier embrayage de changement de vitesse (36) de la boîte de vitesses (14) est déplacé au moyen de l'actionneur de boîte de vitesses (38) d'une première position de fermeture (37, 66) dans une position ouverte (37', 70),
- le premier (36) ou un autre (36a) embrayage de changement de vitesse est déplacé d'une position ouverte (37', 70) dans une deuxième position de fermeture (37", 72) et
- l'embrayage à friction (12) est fermé de nouveau,
**caractérisé en ce que**
le premier embrayage de changement de vitesse (36) est préchargé en direction de la position ouverte (37', 70) au moyen de l'actionneur de boîte de vitesses (38) avant l'ouverture complète (68) de l'embrayage à friction (12).

6. Procédé selon la revendication 5, **caractérisé en ce que** le premier embrayage de changement de vitesse (36) est préchargé en direction de la position ouverte (37', 70) au moyen de l'actionneur de boîte de vitesses (38) avant l'atteinte (t₃) du point de glissement de l'embrayage à friction (12).

7. Procédé selon la revendication 6, **caractérisé en ce que** le premier embrayage de changement de vitesse (36) est déplacé de la première position de fermeture (37, 66) dans la position ouverte (37', 70) avant l'atteinte du point de glissement (t₃) de l'embrayage à friction (12).

8. Boîte de vitesses étagée (14) avec une pluralité de rapports (24, 26), au moins un embrayage de changement de vitesse (36) pour engager et dégager les rapports (24, 26), un actionneur de boîte de vitesses (38) pour déplacer l'embrayage de changement de vitesse (36) et avec des moyens de commande (44) pour l'excitation de l'actionneur (38), de telle sorte que ce dernier déplace l'embrayage de changement de vitesse (36) en réponse à un signal de demande de changement de rapport (48, 58) d'une première position de fermeture (37, 66) dans une position ouverte (37', 70), sachant que les moyens de commande (44) excitent l'actionneur de boîte de vitesses (38) de telle sorte que l'embrayage de changement de vitesse (36) est préchargé en direction de la position ouverte (37', 70) avant que l'actionneur de boîte de vitesses (38) ne déplace l'embrayage de changement de vitesse (36) de la première position de fermeture (37, 66) dans la position ouverte (37', 70),
**caractérisée en ce que**
la précharge (76) augmente progressivement, de préférence linéairement, en réponse au signal de demande de changement de rapport (48), et **en ce que** la vitesse de la montée de la précharge (76) est réglée en fonction d'au moins une grandeur physique et/ou du rapport engagé.
